# EUROPÄISCHE PATENTANMELDUNG

(11) **EP 4 810 350 A1**
(43) Veröffentlichungstag der Anmeldung: **23.09.2026**
(21) Anmeldenummer: 26165745.6
(22) Anmeldetag: 18.03.2026
(51) Int. Cl.: B62D 5/00, B62D 1/04

(54) **STEER-BY-WIRE-LENKANORDNUNG FÜR EIN KRAFTFAHRZEUG**

(30) Priorität: 21.03.2025 DE 102025111082
(71) Anmelder: Volkswagen Aktiengesellschaft, 38440 Wolfsburg (DE)
(72) Erfinder: Kreis, Christopher, 38440 Wolfsburg (DE)

(57) **Zusammenfassung**

Es wird vorgeschlagen, eine Steer-by-wire-Lenkanordnung für ein Kraftfahrzeug mit einem nicht-runden Lenkrad und einem Force-Feedback-Aktuator derart auszugestalten, dass im unbestromten Zustand des Force-Feedback-Aktuators unabhängig vom aktuellen Lenkradeinschlag ein möglichst kleines oder gar kein Drehmoment auf das Lenkrad wirkt. Ein solcher Momentenausgleich kann beispielsweise über eine geeignet an dem Lenkrad oder einem mit dem Lenkrad verbundenen Element platzierte Zusatzmasse oder ein anderes geeignetes Momentenerzeugungsmittel wie beispielsweise eine entsprechend platzierte und dimensionierte Aussparung oder Ausnehmung erreicht werden. Die vorgeschlagene Lenkanordnung kann so das Entstehen einer Asynchronität zwischen Lenkradstellung und der Stellung der gelenkten Räder im unbestromten Zustand des Force-Feedback-Aktuators vermeiden.

## Beschreibung

Die Erfindung betrifft eine Steer-by-wire-Lenkanordnung für ein Kraftfahrzeug, mit einem um eine Lenkachse drehbaren Lenkrad, wobei ein geometrischer Schwerpunkt des Lenkrads und die Lenkachse einen Abstand von zumindest 1 cm voneinander aufweisen. Die Erfindung betrifft weiterhin ein Kraftfahrzeug mit einer solchen Lenkanordnung.

Zukünftige Lenksysteme der Steer-by-Wire (SbW)-Bauart verzichten auf eine mechanische Verbindung zwischen Lenkrad und Lenkgetriebe, wodurch die Lenkzwischenwelle entfällt. Diese Systeme bieten neue Möglichkeiten in der Gestaltung und Funktionalität von Lenkrädern. Insbesondere besteht ein wachsendes Interesse an der Verwendung nichtrunder Lenkräder, da diese sowohl gestalterische als auch funktionale Vorteile bieten. Sie ermöglichen eine optimierte Cockpitgestaltung und vermitteln eine futuristische, neuartige Optik, die von vielen Nutzern als positiv wahrgenommen wird. In Kombination mit den Eigenschaften von SbW-Systemen, wie der Möglichkeit, eine sehr direkte Lenkübersetzung zu realisieren, wird erwartet, dass nicht-runde Lenkräder zunehmend Verbreitung finden.

Nicht-runde Lenkräder, mit anderen Worten also Lenkräder, deren Umfang von einer kreisrunden Form abweicht, unterscheiden sich jedoch grundlegend von herkömmlichen, runden Lenkrädern durch ihre ungleichmäßige Massenverteilung. Diese führt dazu, dass der Einfluss der Schwerkraft auf das Lenkrad aufgrund des variierenden Hebelarms zwischen der Drehachse und dem Schwerpunkt stärker ausgeprägt ist. Der gleiche Effekt tritt auf, wenn das Lenkrad zwar einen kreisrunden Umfang, aber eine nicht symmetrische Massenverteilung aufweist. Während bei runden Lenkrädern die Massenverteilung im Regelfall symmetrisch ist und der Schwerkrafteinfluss minimal bleibt, kann bei nicht-runden Lenkrädern die Lage des Schwerpunkts in Abhängigkeit vom Drehwinkel stark variieren. Dies stellt insbesondere bei Steer-by-Wire-Systemen mit Force-Feedback-Aktuatoren (FFA) ein Problem dar, da diese Systeme oft eine geringe mechanische Systemreibung aufweisen.

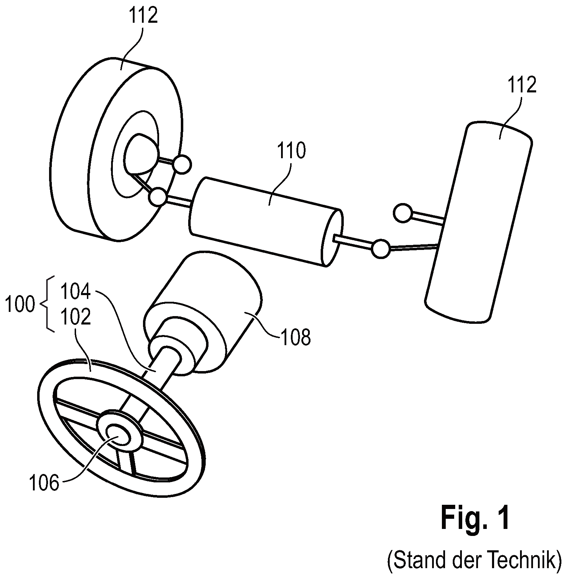

Anhand der Figuren 1 bis 3 wird das Problem, wie es gemäß dem Stand der Technik existiert, verdeutlicht. Figur 1 zeigt eine bekannte Lenkanordnung 100, welche ein um die Lenkachse 106 drehbares Lenkrad 102 und eine Lenksäule 104 aufweist. Die Lenksäule 104 ist mit dem Force-Feedback-Aktuator 108 verbunden, welcher eine haptische Rückmeldung an das Lenkrad 102 generiert und dem Fahrer somit ein ähnliches Fahrgefühl vermittelt, wie er es aus herkömmlichen Kraftfahrzeugen, die eine mechanische Verbindung zwischen Lenkrad und gelenkten Rädern aufweisen, kennt. Es ist in Figur 1 weiterhin der sogenannte Road-Wheel-Aktuator 110 dargestellt, welcher mechanisch mit den zu lenkenden Rädern 112 verbunden ist. Die Lenkanordnung 100 generiert aus einer Drehung des Lenkrads 102 ein elektronisches Signal, welches auf elektronische Weise, beispielsweise über eine Leitung, an den Road-Wheel-Aktuator 110 übertragen wird, welcher sodann das empfangene Signal in den gewünschten Lenkeinschlag der Räder 112 umsetzt.

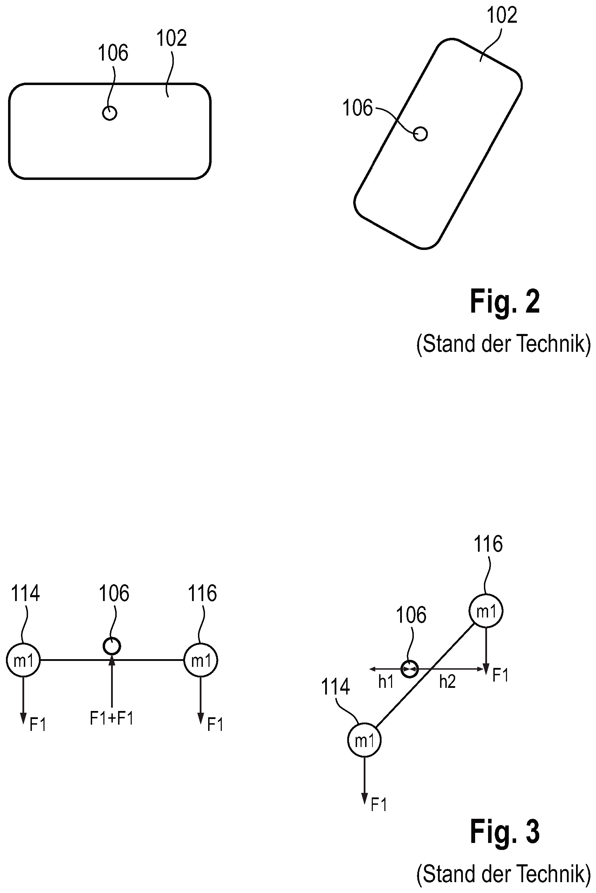

Figur 2 zeigt schematisch und stark vereinfacht ein Lenkrad 102, welches im Wesentlichen eine rechteckige Form und somit lediglich zwei Symmetrieachsen aufweist. Weiterhin ist die Lenkachse 106 dargestellt, welche nicht durch den geometrischen Schwerpunkt des Lenkrads 102 verläuft. Das Lenkrad ist im linken Teil der Figur in der Neutralstellung dargestellt. Im rechten Teil der Figur 2 ist das Lenkrad um etwas weniger als 90° gegen den Uhrzeigersinn aus seiner Neutralstellung heraus gedreht worden. Beispielsweise bei einem Einparkvorgang kann dies die Lenkradstellung sein, in der das Kraftfahrzeug ausgeschaltet wird. Aufgrund der stark von einer Kreissymmetrie abweichenden Form des Lenkrads 102 und der außermittigen Position der Lenkachse 106 wirkt in dieser Position ein Drehmoment auf das Lenkrad 102, welches, wenn das diesem Drehmoment entgegenwirkende Reibmoment überwunden wird, das Lenkrad 102 in Richtung seiner Neutralstellung zurück dreht.

Figur 3 verdeutlicht die Entstehung eines solchen Drehmoments anhand einer Darstellung, in der das Lenkrad durch einen linken Massenpunkt 114 und einen rechten Massenpunkt 116 repräsentiert wird. Beide Massenpunkte 114 und 116 weisen die gleiche Masse m1 auf. Im linken Bereich der Figur befindet sich das Lenkrad, wie auch in Figur 2, in der Neutralstellung. Der linke Massenpunkt 114 und der rechte Massenpunkt 116 üben jeweils die gleiche Gewichtskraft F1 nach unten aus und befinden sich im gleichen Abstand zur Lenkachse 106. Da sich das Drehmoment aus dem Produkt von Gewichtskraft und wirkendem Hebelarm ergibt heben sich die beiden von den Massenpunkten 114 und 116 ausgeübten Drehmomente gegenseitig auf, sodass insgesamt kein Nettodrehmoment um die Lenkachse 106 auf das Lenkrad wirkt. Im rechten Bereich der Figur befindet sich analog zu Figur 2 das Lenkrad in einer eingeschlagenen Position. Bedingt dadurch, dass sich die Lenkachse 106 nicht im geometrischen Schwerpunkt des Lenkrads befindet, was in Figur 3 dadurch repräsentiert wird, dass sich die Lenkachse 106 nicht auf der Verbindungslinie der beiden Massenpunkte 114 und 116 befindet, beeinflusst die Drehung des Lenkrads die Hebelarme h1 und h2, die das jeweils von den beiden Massenpunkten 114 und 116 ausgeübte Drehmoment bestimmen. Da in dieser Position der Hebelarm h2 des zweiten Massenpunktes 116 deutlich größer ist als der Hebelarm h1 des ersten Massenpunktes 114 ist das sich ergebende, durch den zweiten Massenpunkt 116 bewirkte Drehmoment auf das Lenkrad im Uhrzeigersinn größer als das durch den ersten Massenpunkt 114 bewirkte Drehmoment auf das Lenkrad gegen den Uhrzeigersinn, sodass sich ein Nettodrehmoment in Richtung des Uhrzeigersinns ergibt.

Die DE 10 2021 208 838 A1 beschreibt ein Steer-by-Wire-System, bei dem das Lenkrad mechanisch vom Lenkgetriebe entkoppelt ist. Es wird erläutert, wie eine Synchronisation zwischen der Lenkradposition und der Radposition durch aktive Steuerung erfolgen kann. Dabei wird die Lenkradposition durch einen Force-Feedback-Aktuator geregelt, der ein Rückstellmoment erzeugt. Das Dokument beschreibt zudem die Möglichkeit, das Lenkrad in eine definierte Position zu bringen, um eine Synchronisation mit der Radposition zu gewährleisten.

Die EP 4 382 368 A1 beschreibt ein System zur Überwachung der Lenkradposition in Fahrzeugen mit nicht-runden Lenkrädern. Es wird ein Verfahren beschrieben, bei dem die Lenkradposition kontinuierlich überwacht wird, um sicherzustellen, dass das Lenkrad in einer definierten Position verbleibt. Dieses System umfasst eine aktive Steuerung, die es ermöglicht, die Lenkradposition auch während des Betriebs des Fahrzeugs zu stabilisieren.

Die DE 10 2021 107 446 A1 beschreibt ein Verfahren zur Synchronisation der Lenkrad- und Radposition in Steer-by-Wire-Systemen. Dabei wird ein Algorithmus verwendet, um die Lenkradposition nach dem Einschalten des Systems mit der Radposition abzugleichen.

Das zugrunde liegende Problem ergibt sich insbesondere bei nicht-runden Lenkrädern, wenn das Fahrzeug ausgeschaltet wird und die Steuergeräte in den Ruhezustand wechseln. In diesem Zustand wird der Force-Feedback-Aktuator nicht mehr bestromt, sodass keine aktive Regelung oder Haltefunktion für das Lenkrad mehr möglich ist. Durch den Schwerkrafteinfluss kann sich das Lenkrad selbstständig in eine Schwerpunktlage drehen, da die mechanische Reibung des Systems nicht ausreicht, um dies zu verhindern. Dies führt zu einer Asynchronität zwischen der Lenkradposition und der Radposition. Beim erneuten Starten des Fahrzeugs müssen entweder das Lenkrad oder die Räder aktiv in eine zueinander synchrone Position gebracht werden. Dieser Vorgang ist für den Fahrer wahrnehmbar und beeinträchtigt das Vertrauen in das Steer-by-Wire-System. Subjektiv wird das System als weniger sicher und weniger hochwertig wahrgenommen. Zudem kostet die aktive Synchronisation Zeit, was die Nutzung des Fahrzeugs verzögern kann.

Besonders problematisch ist dieses Verhalten, wenn der Schwerpunkt des Lenkrads oberhalb der Drehachse liegt. In solchen Fällen ist der Schwerkrafteinfluss besonders stark, was das selbstständige Drehen des Lenkrads in eine Schwerpunktlage begünstigt. Die beschriebenen Probleme treten unabhängig von der spezifischen Form des nicht-runden Lenkrads auf, sind jedoch bei asymmetrischen Lenkrädern besonders ausgeprägt.

Eine mögliche, naheliegende Lösung ist, den FFA so auszuführen, dass die mechanische Reibung höher ist als das Drehmoment, das aus der Rückstellung in Schwerpunktlage resultiert. Diese Lösung weist jedoch den Nachteil auf, dass die zusätzliche Reibung zu einer Verschlechterung des Lenkgefühls und zu einem höherem Leistungsbedarf des FFA-Motors im Betrieb führt.

Die Aufgabe der vorliegenden Erfindung ist es daher, eine Möglichkeit anzugeben, die Position des Lenkrads auch im Ruhezustand des Systems zu stabilisieren, ohne dass eine aktive Regelung erforderlich ist.

Die Aufgabe wird erfindungsgemäß gelöst durch eine Steer-by-wire-Lenkanordnung für ein Kraftfahrzeug, mit einem um eine Lenkachse drehbaren Lenkrad, wobei ein geometrischer Schwerpunkt des Lenkrads und die Lenkachse einen Abstand von zumindest 1 cm voneinander aufweisen, und mit zumindest einem Momentenerzeugungsmittel, welches ausgestaltet ist zur zumindest teilweisen Kompensation eines Drehmoments, das aufgrund des Abstands zwischen dem geometrischen Schwerpunkt und der Lenkachse auf das Lenkrad wirkt, wenn das Lenkrad eine von einer Neutralstellung abweichende Stellung einnimmt. Die Aufgabe wird weiterhin gelöst durch ein Kraftfahrzeug mit einer solchen Lenkanordnung.

Unter einer Steer-by-Wire-Lenkanordnung wird im Rahmen der vorliegenden Beschreibung insbesondere ein elektronisches Lenksystem verstanden, bei dem keine mechanische Verbindung zwischen dem Lenkrad und den gelenkten Rädern besteht. Stattdessen werden die Lenkbefehle des Fahrers über Sensoren erfasst und elektronisch an Aktuatoren weitergeleitet, die die Räder entsprechend steuern.

Unter dem geometrischen Schwerpunkt wird im Rahmen der vorliegenden Beschreibung insbesondere ein Punkt verstanden, der die gleichmäßige Verteilung der Geometrie eines Körpers beschreibt. Er wird allein durch die Form und Abmessungen des Körpers bestimmt, unabhängig von dessen Material oder Dichte. Der geometrische Schwerpunkt ist der Punkt, an dem sich die resultierende aller Flächen- oder Volumenelemente eines Körpers bei gleichmäßiger Verteilung befindet. Unter dem physikalischen Schwerpunkt wird in Abgrenzung zum geometrischen Schwerpunkt ein Punkt verstanden, an dem die gesamte Masse eines Körpers gedanklich konzentriert ist. Der physikalische Schwerpunkt, der auch als Massenmittelpunkt bezeichnet werden kann, ist also der Punkt, an dem die resultierende aller Massen- oder Gewichtskräfte eines Körpers angreift. Er berücksichtigt die Massenverteilung und kann sich vom geometrischen Schwerpunkt unterscheiden, wenn die Dichte des Körpers nicht homogen ist, wenn der Körper also aus Materialien mit unterschiedlicher Dichte besteht oder ungleichmäßig aufgebaut ist. Beide Schwerpunkte fallen nur bei homogener Dichteverteilung zusammen.

Unter dem Abstand zwischen dem geometrischen Schwerpunkt und der Lenkachse wird insbesondere der kürzest mögliche Abstand des Schwerpunkts von der Lenkachse in einer Richtung senkrecht zur Lenkachse verstanden. Hilfsweise kann der Abstand eines geometrischen Schwerpunkts einer Projektion des Lenkrads auf eine Ebene senkrecht zur Lenksachse von der Lenkachse verwendet werden. Der Abstand des geometrischen Schwerpunkts von der Lenkachse kann beispielsweise zumindest 1 cm, zumindest 2 cm oder zumindest 3 cm betragen.

Unter einem Force-Feedback-Aktuator wird im Rahmen der vorliegenden Beschreibung insbesondere ein elektromechanisches Bauteil verstanden, das physische Rückmeldungen, mit anderen Worten also ein haptisches Feedback, an den Benutzer liefert, indem es Kräfte, Vibrationen oder Bewegungen erzeugt. Dies geschieht typischerweise durch Motoren, Elektromagnete oder piezoelektrische Elemente, die auf Eingaben des Benutzers oder auf simulierte Umgebungsbedingungen reagieren. Eine gängige deutsche Übersetzung ist Kraft-Rückkopplungs-Aktuator oder Kraft-Rückmeldung-Aktuator.

Die erfindungsgemäße Lenkanordnung weist einen mechanisch realisierten Massenausgleich auf, der dazu führt, dass der resultierende Schwerkrafteinfluss auf eine unbeabsichtigte Drehung des Lenkrads beziehungsweise auf eine Ruhelage des Lenkrads reduziert oder vollständig ausgeglichen wird. Ziel ist es dabei, das effektiv auf das Lenkrad wirkende Drehmoment im unbestromten Zustand so weit zu reduzieren, dass es im Stillstand des Kraftfahrzeugs zu keiner unbeabsichtigten Drehung des Lenkrads kommt. Es ist dabei erkannt worden, dass es bei einer Massenverteilung um die Drehachse, die nicht rotationssymmetrisch ist oder nicht zumindest eine relativ große Anzahl von Symmetrieachsen aufweist, bei von der Neutralstellung abweichenden Lenkradstellungen oft zu auf das Lenkrad wirkenden Drehmomenten kommen kann, die beim Fehlen eines Gegenmoments, wie es bei Steer-by-Wire Lenkungen nach dem Ausschalten des Kraftfahrzeugs regelmäßig der Fall ist, dann zu einer unbeabsichtigten Drehung des Lenkrads führen.

Erfindungsgemäß wird nun zumindest ein Momentenerzeugungsmittel, beispielsweise ein Massenelement, an einer geeigneten Stelle der Lenkanordnung angeordnet. Das Momentenerzeugungsmittel wird dabei derart dimensioniert und positioniert, dass ein Drehmoment, welches auf das Lenkrad wirkt, wenn sich dieses nicht in der Neutralstellung befindet, zumindest anteilig kompensiert wird. Das Momentenerzeugungsmittel kann ein Drehmomenterzeugungsmittel sein. Insbesondere kann dabei das Drehmoment durch ein Produkt aus der Größe der auf das Momentenerzeugungsmittel wirkenden Schwerkraft und einem effektiven Hebelarm beschrieben werden.

Vorzugsweise ist das Momentenerzeugungsmittel derart ausgestaltet, insbesondere angeordnet und dimensioniert, dass ein Abstand zwischen einem physikalischen Schwerpunkt des Lenkrads und der Lenkachse weniger als 3 cm, vorzugsweise weniger als 2 cm und besonders bevorzugt weniger als 1 cm beträgt. Idealerweise ist das Momentenerzeugungsmittel derart ausgestaltet, dass der resultierende physikalische Schwerpunkt des Lenkrads und die Lenkachse zusammenfallen oder nahezu zusammenfallen. Wenn die Lenkachse durch den physikalischen Schwerpunkt des Lenkrads verläuft ist das Lenkrad in jeder Position momentenfrei, sodass es zu keiner unbeabsichtigten Verdrehung des Lenkrads und somit zu keiner Asynchronität zwischen der Lenkradposition und der Position der Räder kommen kann.

Es ist mit Vorteil möglich, dass das Momentenerzeugungsmittel derart ausgestaltet ist, dass ein maximales bei einer Auslenkung des Lenkrads aus der Neutralstellung auf das Lenkrad wirkende effektive Drehmoment kleiner als ein bei einer Drehung des Lenkrads wirkendes Reibmoment ist. Auch auf diese Weise kann erreicht werden, dass es zu keiner unbeabsichtigten Verdrehung des Lenkrads und somit zu keiner Asynchronität zwischen der Lenkradposition und der Position der Räder kommen kann. Die beschriebene Ausgestaltung hat den weiteren Vorteil, dass die Lenkachse nicht direkt durch den physikalischen Schwerpunkt des Lenkrads verlaufen muss, was zu einer größeren Freiheit bei der Ausgestaltung des Lenkrads führt und den Einsatz eines kleiner dimensionierten Momentenerzeugungsmittels ermöglicht. Grundsätzlich ist es weiterhin möglich, in Kombination mit der beschriebenen Ausgestaltung durch ein Reibelement zumindest eine moderate Erhöhung des Reibmoments der Lenkanordnung zu bewirken, was wiederum die Größe des benötigten Momentenerzeugungsmittels verringern kann.

Wie bereits beschrieben ist es möglich, dass das Momentenerzeugungsmittel als Zusatzmasse ausgestaltet ist. Mit anderen Worten kann also gezielt die Masse des Lenkrads in einem geeigneten Bereich erhöht werden, um die Schwerpunktslage zu optimieren. Eine solche Zusatzmasse kann beispielsweise ein Zusatzgewicht und insbesondere ein Zusatzgewicht aus Metall sein. Dadurch, dass die Zusatzmasse keine weiteren Funktionen übernimmt ergibt sich eine große Freiheit bei der Formgestaltung und der Positionierung der Zusatzmasse. Es kann so auf einfache Weise der effektive physikalische Schwerpunkt des Lenkrads wie gewünscht beeinflusst werden.

Wie bereits angesprochen kann die Zusatzmasse als unbewegliches Element und als abgesehen von seinem Einfluss auf die Massenverteilung der Lenkanordnung funktionsloses Element ausgestaltet sein. Mit anderen Worten kann die Zusatzmasse fest mit einem anderen Element der Lenkanordnung, beispielsweise mit dem Lenkrad, verbunden sein. Weiterhin kann die Zusatzmasse als ansonsten funktionsloses Element ausgestaltet sein. Durch eine solche Zusatzmasse oder durch eine Mehrzahl solcher Zusatzmassen kann dann ein bereits bestehendes Lenkrad derart angepasst werden, dass die gewünschte Schwerpunktslage des physikalischen Schwerpunkts erreicht wird.

Es ist ebenfalls möglich, dass das Momentenerzeugungsmittel als Aussparung, als Ausnehmung oder als Hohlraum ausgestaltet ist. Mit anderen Worten kann also gezielt die Masse des Lenkrads oder eines anderen Elements der Lenksäule und/oder des FFA,in einem geeigneten Bereich verringert werden, um die Schwerpunktslage zu optimieren. Ein Beispiel für ein gut geeignetes Element zur Beeinflussung des Schwerpunkts ist ein auf der Lenkachse angeordnetes Getriebeelement, welches beispielsweise ein Riemenrad sein kann. Das Momentenerzeugungsmittel kann beispielsweise als Durchgangsloch, als Mulde oder als Vertiefung ausgestaltet sein. Ebenfalls kann das Momentenerzeugungsmittel als Hohlraum innerhalb des Lenkrads ausgestaltet sein.

Selbstverständlich ist es möglich, dass mehrere einzelne Momentenerzeugungsmittel vorhanden sind. So können mehrere Zusatzmassen, mehrere Ausnehmungen oder Hohlräume, oder eine Kombination aus einer oder mehrerer Zusatzmassen mit einer oder mehreren Ausnehmungen und/oder einem oder mehreren Hohlräumen verwendet werden. Auf diese Weise können verschiedene Lenkradmodelle in Kombination mit gleichartigen Zusatzmassen verwendet werden, wobei Anzahl und/oder Position der Zusatzmassen an das jeweilige Lenkradmodell angepasst werden können.

Es ist möglich, dass das Momentenerzeugungsmittel und der geometrische Schwerpunkt in vertikaler Richtung gesehen auf derselben Seite der Lenkachse angeordnet sind. Eine solche Anordnung ist insbesondere dann sinnvoll, wenn das Momentenerzeugungsmittel eine Zusatzmasse ist. Es ist ebenfalls möglich, dass das Momentenerzeugungsmittel und der geometrische Schwerpunkt in vertikaler Richtung gesehen auf unterschiedlichen Seiten der Lenkachse angeordnet sind. Eine solche Anordnung ist insbesondere dann sinnvoll, wenn das Momentenerzeugungsmittel eine Ausnehmung oder ein Hohlraum ist.

Eine Weiterbildung der Erfindung sieht vor, dass das Lenkrad über ein Drehmomentübertragungselement mit einem Force-Feedback-Aktuator verbunden ist, und dass das Momentenerzeugungsmittel an dem Drehmomentübertragungselement angeordnet ist. Beispielsweise kann das Drehmomentübertragungselement als Riemenscheibe ausgestaltet sein. Die beschriebene Ausgestaltung hat den Vorteil, dass das Lenkrad selbst, welches ein sichtbares Element im Innenraum des Kraftfahrzeugs ist, nicht angepasst werden muss. Statt dessen kann ein ebenfalls um die Lenkachse drehbares Element hinsichtlich seiner Massenverteilung derart angepasst werden, dass das System aus Lenkrad und dem weiteren Element, beispielsweise also dem Drehmomentübertragungselement, hinsichtlich des resultierenden physikalischen Schwerpunkts bzw. insbesondere hinsichtlich des resultierenden auf das Lenkrad wirkenden Drehmoments wie gewünscht angepasst wird.

Eine Weiterbildung der Erfindung sieht vor, dass das Momentenerzeugungsmittel als Zusatzmasse und relativ zu dem Drehmomentübertragungselement beweglich ausgestaltet ist. Es ergibt sich so ein weiterer Freiheitsgrad bei der konkreten Ausgestaltung des Systems. Durch die Beweglichkeit der Zusatzmasse kann das System so angepasst werden, dass bei unterschiedlichen Stellungen des Lenkrads jeweils ein optimales Drehmoment durch die Zusatzmasse erzeugt wird.

Hierzu ist es möglich, dass das Drehmomentübertragungselement eine Kulisse aufweist, in der die Zusatzmasse abhängig von einem Lenkwinkel des Lenkrads beweglich angeordnet ist. Insbesondere ist es dabei möglich, dass abhängig vom Lenkwinkel des Lenkrads der Abstand der Zusatzmasse von der Lenkachse verändert wird, sodass das erzeugte Drehmoment entsprechend angepasst wird. Die Bewegung der Zusatzmasse wird dann passiv über die Kulisse geführt, in der sich die Zusatzmasse so bewegt, dass die Zusatzmasse je nach Lenkradwinkel eine für die Kompensation besonders vorteilhafte Position einnimmt. In einer alternativen Ausführungsform kann die Zusatzmasse aktiv über einen elektromechanischen Mechanismus bewegt werden, so dass der jeweils wirksame Hebelarm aktiv beeinflusst werden und die Zusatzmasse in eine vorteilhafte Position gebracht werden kann.

In einer Weiterbildung der Erfindung ist es ebenfalls möglich, dass die Lenkanordnung derart ausgestaltet ist, dass jeder Lenksäulenposition einer Lenksäule der Lenkanordnung jeweils eine Position des Momentenerzeugungsmittels zugeordnet ist derart, dass ein in der jeweiligen Lenksäulenposition gegenüber einer Standardposition der Lenksäule auftretendes, auf das Lenkrad wirkendes Differenzmoment kompensiert wird. Mit anderen Worten kann die Position des Momentenerzeugungsmittels, im Regelfall also des Zusatzgewichts, an verschiedene Einstellungen einer Lenksäule angepasst werden. Insbesondere sind Lenkräder oftmals höhenverstellbarer ausgestaltet, was durch eine Schwenkbewegung der Lenksäule realisiert werden kann. Dabei ändert sich dann der von der Lenksäule und somit von der Lenkachse mit der Horizontalen gebildete Winkel. Diese Winkeländerung kann Einfluss auf das durch die Zusatzmasse ausgeübte Drehmoment haben. Durch die beschriebene Ausgestaltung kann ein solches, durch die Verstellung des Lenkrads bzw. der Lenksäule erzeugtes Differenzmoment dann ausgeglichen werden. Ebenfalls ist es möglich, dass eine solche Verstellbarkeit der Lenksäule bei der Dimensionierung des Momentenerzeugungsmittels berücksichtigt wird. Beispielsweise kann das Momentenerzeugungsmittel derart dimensioniert sein, dass der momentenkompensierende Effekt in einer mittleren Position der Lenksäule maximal ist. Es kann auf diese Weise sichergestellt werden, dass in allen Positionen der Lenksäule eine ausreichende Kompensation des Drehmoments erfolgt.

Gemäß einer vorteilhaften Weiterbildung weist die Lenkanordnung zumindest ein Anschlagselement auf, welches mit dem Momentenerzeugungsmittel zusammenwirkt und eine weitere Drehung des Lenkrads verhindert, wenn ein maximaler Drehwinkel des Lenkrads erreicht ist. Eine einfache Ausgestaltung dieser Art besteht darin, dass das Momentenerzeugungsmittel als Zusatzmasse ausgestaltet ist, welche von dem Element, an dem sie angeordnet ist, hervor steht. Dieses Element kann beispielsweise eine Riemenscheibe sein. Das Anschlagselement kann dann als korrespondierender Vorsprung ausgestaltet sein, der beim Erreichen des maximalen Drehwinkels des Lenkrads durch einen Kontakt mit der Zusatzmasse eine weitere Drehung des Lenkrads verhindert.

Gemäß einer Weiterbildung der Erfindung ist eine Orientierung eines Elements, an welchem das Momentenerzeugungsmittel angeordnet ist, relativ zu einer Welle, an der das Element befestigt wird, durch eine Verdrehsicherung festgelegt. Auf diese Weise können Ungenauigkeiten oder Fehler bei der Montage der Lenkanordnung vermieden werden, sodass in jedem Fall eine genaue Drehmomentkompensation erfolgen kann.

Ausführungsbeispiele der Erfindung werden anhand der Zeichnungen und der nachfolgenden Beschreibung näher erläutert. Es zeigen:
- Fig. 4:: eine Darstellung eines ersten Ausführungsbeispiels eines Lenkrads einer erfindungsgemäßen Lenkanordnung,
- Fig. 5:: im linken Bereich eine Seitenansicht und im rechten Bereich eine rückwärtige Ansicht eines zweiten Ausführungsbeispiels einer erfindungsgemäßen Lenkanordnung,
- Fig. 6:: ein Riemenrad gemäß eines dritten Ausführungsbeispiels einer erfindungsgemäßen Lenkanordnung, und
- Fig. 7:: ein erfindungsgemäßes Kraftfahrzeug 30 mit einer erfindungsgemäßen Lenkanordnung.

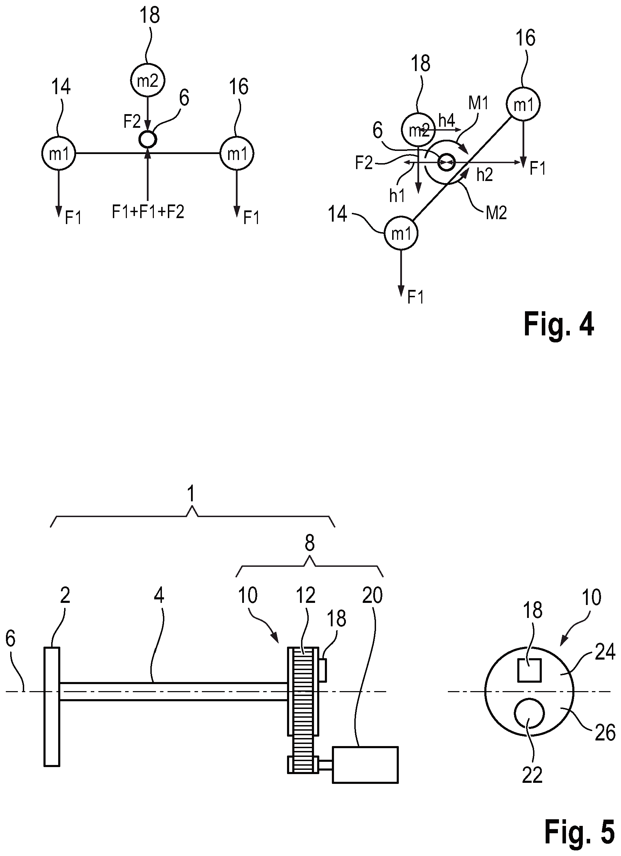

Figur 4 zeigt eine anhand von Massenpunkten vereinfachte Darstellung eines ersten Ausführungsbeispiels eines Lenkrads 2 einer erfindungsgemäßen Lenkanordnung. Der erste Massenpunkt 14, der zweite Massenpunkt 16 sowie die Lenkachse 6 entsprechen dabei den beiden Massenpunkten und der Lenkachse aus Figur 3. Zusätzlich ist hier aber noch als Momentenerzeugungsmittel die Zusatzmasse 18 vorhanden, welche im dargestellten Ausführungsbeispiel, bezogen auf die in der linken Seite der Figur 4 dargestellte Neutralstellung des Lenkrads 2, senkrecht oberhalb der Lenkachse 6 angeordnet ist.

Auf der rechten Seite der Figur 4 ist wiederum das Lenkrad 2 in einer gegen den Uhrzeigersinn eingeschlagenen Position dargestellt. Es ist zu erkennen, dass die Zusatzmasse 18 nun ebenfalls ein Drehmoment auf das Lenkrad 2 ausübt. Das von der Zusatzmasse 18 ausgeübte Drehmoment ergibt sich dabei aus dem Produkt der Gewichtskraft F2 der Zusatzmasse 18 und dem Hebelarm h4. Insgesamt führt somit das Produkt aus der Gewichtskraft des zweiten Massenpunktes 16 und dem Hebelarm h2 zu einem im Uhrzeigersinn wirkenden Drehmoment M1. Der erste Massenpunkt 14 und die Zusatzmasse 18 bewirken hingegen jeweils Drehmomente, die entgegen dem Uhrzeigersinn wirken. Der erste Massenpunkt 14 bewirkt dabei ein erstes Teilmoment, welches sich aus dem Produkt der Gewichtskraft F1 und dem Hebelarm h1 ergibt, und die Zusatzmasse 18 bewirkt ein zweites Teilmoment, welches sich aus dem Produkt der Gewichtskraft F2 und dem Hebelarm h4 ergibt. Die Summe dieser beiden Teilmomente ergibt dann das gesamte, im Uhrzeigersinn wirkende Drehmoment M2. Bei geschickter Positionierung der Zusatzmasse 18 kann erreicht werden, dass sich die beiden Drehmomente M1 und M2 vollständig oder nahezu vollständig kompensieren, sodass kein wirksames Nettodrehmoment auf das Lenkrad 2 wirkt.

Figur 5 zeigt im linken Bereich eine Seitenansicht und im rechten Bereich eine rückwärtige Ansicht eines zweiten Ausführungsbeispiels einer erfindungsgemäßen Lenkanordnung 1. Die Lenkanordnung 1 umfasst ein Lenkrad 2, eine Lenksäule 4, durch die die Lenkachse 6 verläuft, sowie einen Force-Feedback-Aktuator 8. Dieser wiederum besteht aus einem mit der Lenksäule 6 verbundenen Riemenrad 10, welches über den Riemen 12 mit dem Elektromotor 20 in Verbindung steht. Der Elektromotor 20 kann somit Kräfte bzw. Drehmomente auf das Lenkrad 2 ausüben.

Am Riemenrad 10 ist eine Zusatzmasse 18 angebracht. Die Zusatzmasse 18 ist dabei im dargestellten Ausführungsbeispiel in der oberen Hälfte 24 des Riemenrads 10 angeordnet. Weiterhin ist die Zusatzmasse 18 auf der dem Lenkrad 2 abgewandten Seite des Riemenrads 10 angeordnet. Es ist zu erkennen, dass die Lenkachse 6 nicht durch den geometrischen Schwerpunkt des Lenkrads 2 verläuft. Das Riemenrad 10 hingegen ist hinsichtlich seiner Grundform rotationssymmetrisch bzw. kreisförmig ausgestaltet, wobei die Lenkachse 6 durch den Mittelpunkt des Riemenrads 10 und somit auch durch den geometrischen Schwerpunkts des Riemenrads 10 verläuft.

In der in der rechten Hälfte der Figur 5 dargestellten Ansicht des Riemenrads 10 entlang der Lenkachse 6 ist zu erkennen, dass das Riemenrad 10 in seiner unteren Hälfte 26 eine Aussparung 22 aufweist. Im dargestellten Ausführungsbeispiel ist die Aussparung 22 als Durchgangsloch ausgestaltet. Die Aussparung 22 wirkt dabei grundsätzlich genauso die Zusatzmasse 18. Wenn das Lenkrad 2 gedreht wird dreht sich das Riemenrad 10 synchron zum Lenkrad 2 mit. Dabei wird dann die Zusatzmasse 18 beispielsweise zur linken Seite des Riemenrads 10 hin ausgelenkt. Gleichzeitig wird die Aussparung 22 zur rechten Seite des Riemenrads 10 hin ausgelenkt. Auf diese Weise ergibt sich für den beschriebenen Vorgang eine Erhöhung des entgegen des Uhrzeigersinn wirkenden Drehmoments und eine Verringerung des mit dem Uhrzeigersinn wirkenden Drehmoments. Insgesamt wird so ein durch die beiden beschriebenen Anteile gebildetes Nettodrehmoment entgegen des Uhrzeigersinns bewirkt, das größer ist, als das alleine von der Zusatzmasse 18 bewirkte Drehmoment.

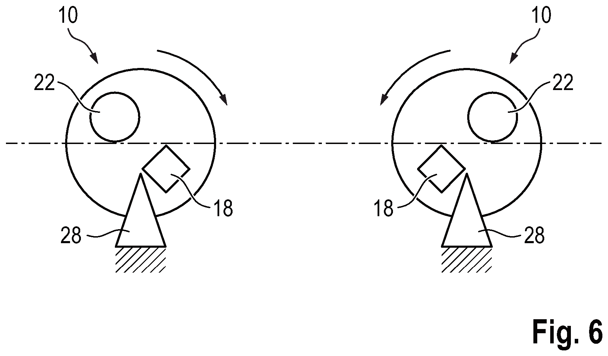

Figur 6 zeigt ein Riemenrad 10 gemäß eines dritten Ausführungsbeispiels einer erfindungsgemäßen Lenkanordnung. Das Riemenrad 10 ist grundsätzlich gleichartig wie das Riemenrad aus Figur 5 aufgebaut und weist somit eine Zusatzmasse 18 sowie eine Aussparung 22 auf. Im dargestellten dritten Ausführungsbeispiel wirkt die Zusatzmasse 18 beim Erreichen eines maximalen Auslenkungswinkels mit einem Anschlagselement 28 zusammen. Das Anschlagselement 28 ist dabei als mechanisches Anschlagselement, beispielsweise als Vorsprung, der in axialer Richtung leicht verschoben zum Riemenrad 10 und in radialer Richtung mit dem Riemenrad 10 überlappend angeordnet ist, ausgestaltet. Im linken Teil der Figur ist dabei eine maximale Auslenkung des Riemenrads 10 und somit auch des nicht dargestellten Lenkrads in Richtung des Uhrzeigersinns dargestellt, und im rechten Bereich der Figur ist eine maximale Auslenkung des Riemenrads 10 gegen den Uhrzeigersinn dargestellt. Es ist zu erkennen, dass die Zusatzmasse 18 jeweils von einer Seite her in Kontakt mit dem Anschlagselement 28 gekommen ist, sodass eine weitere Drehung des Riemenrads 10 und somit auch des mit dem Riemenrads 10 verbundenen Lenkrads verhindert wird. Ein solcher mechanischer Endanschlag, wie er durch das Anschlagselement 28 in Verbindung mit der Zusatzmasse 18 hergestellt wird, ist von Vorteil, um ein unbegrenztes Drehen des Lenkrads der SbW-Lenkanordnung , welches dann nicht mehr in eine Positionsänderung der zu lenkenden Räder des Kraftfahrzeugs umgesetzt werden könnte, zu verhindern.

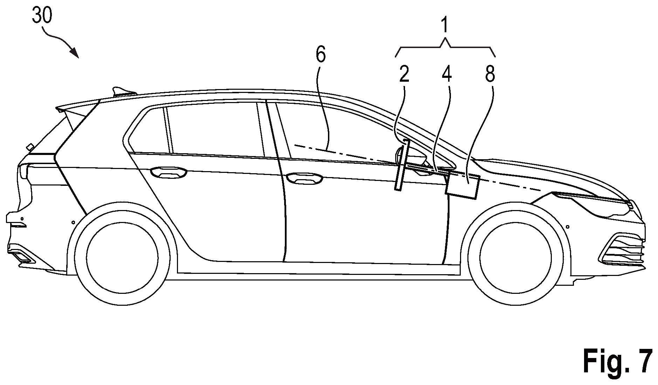

Figur 7 zeigt der Vollständigkeit halber ein erfindungsgemäßes Kraftfahrzeug 30 mit einer erfindungsgemäßen Lenkanordnung 1. Die Lenkanordnung 1 umfasst dabei ein um die Lenkachse 6 drehbares Lenkrad, die Lenksäule 4 und den Force-Feedback-Aktuator 8.

### Bezugszeichenliste

- 1: Lenkanordnung
- 2: Lenkrad
- 4: Lenksäule
- 6: Lenkachse
- 8: Force-Feedback-Aktuator
- 10: Riemenrad
- 12: Riemen
- 14: Massenpunkt
- 16: Massenpunkt
- 18: Zusatzmasse
- 20: Elektromotor
- 22: Aussparung
- 24: obere Hälfte
- 26: untere Hälfte
- 28: Anschlagelement
- 30: Kraftfahrzeug

- 100: Lenkanordnung
- 102: Lenkrad
- 104: Lenksäule
- 106: Lenkachse
- 108: Force-Feedback-Aktuator
- 110: Road-Wheel-Aktuator
- 112: Rad
- 114: Massenpunkt
- 116: Massenpunkt

## Patentansprüche

1. Steer-by-wire-Lenkanordnung (1) für ein Kraftfahrzeug (30), mit einem um eine Lenkachse (6) drehbaren Lenkrad (2), wobei ein geometrischer Schwerpunkt des Lenkrads (2) und die Lenkachse (6) einen Abstand von zumindest 1 cm voneinander aufweisen, und mit zumindest einem Momentenerzeugungsmittel, welches ausgestaltet ist zur zumindest teilweisen Kompensation eines Drehmoments, das aufgrund des Abstands zwischen dem geometrischen Schwerpunkt und der Lenkachse (6) auf das Lenkrad (2) wirkt, wenn das Lenkrad (2) eine von einer Neutralstellung abweichende Stellung einnimmt.

2. Lenkanordnung (1) nach Anspruch 1, wobei das Momentenerzeugungsmittel derart ausgestaltet ist, dass ein Abstand zwischen einem physikalischen Schwerpunkt des Lenkrads (2) und der Lenkachse (6) weniger als 1 cm beträgt.

3. Lenkanordnung (1) nach einem der vorstehenden Ansprüche, wobei das Momentenerzeugungsmittel derart ausgestaltet ist, dass ein maximales bei einer Auslenkung des Lenkrads (2) aus der Neutralstellung auf das Lenkrad (2) wirkende effektive Drehmoment kleiner als ein bei einer Drehung des Lenkrads (2) wirkendes Reibmoment ist.

4. Lenkanordnung (1) nach einem der vorstehenden Ansprüche, wobei das Momentenerzeugungsmittel als Zusatzmasse (18) ausgestaltet ist.

5. Lenkanordnung (1) nach einem der vorstehenden Ansprüche, wobei das Momentenerzeugungsmittel als Aussparung (22), als Ausnehmung oder als Hohlraum ausgestaltet ist.

6. Lenkanordnung (1) nach einem der vorstehenden Ansprüche, wobei das Momentenerzeugungsmittel und der geometrische Schwerpunkt in vertikaler Richtung gesehen auf derselben Seite der Lenkachse (6) angeordnet sind.

7. Lenkanordnung (1) nach einem der vorstehenden Ansprüche, wobei das Lenkrad (2) über ein Drehmomentübertragungselement mit einem Force-Feedback-Aktuator (8) verbunden ist, und wobei das Momentenerzeugungsmittel an dem Drehmomentübertragungselement angeordnet ist.

8. Lenkanordnung (1) nach Anspruch 7, wobei das Drehmomentübertragungselement als Riemenscheibe (10) ausgestaltet ist.

9. Lenkanordnung (1) nach einem der vorstehenden Ansprüche, wobei die Lenkanordnug (1) zumindest ein Anschlagselement (28) aufweist, welches mit dem Momentenerzeugungsmittel zusammenwirkt und eine weitere Drehung des Lenkrads (2) verhindert, wenn ein maximaler Drehwinkel des Lenkrads (2) erreicht ist.

10. Kraftfahrzeug (30) mit einer Lenkanordnung (1) nach einem der vorstehenden Ansprüche.
